# EUROPEAN PATENT SPECIFICATION

(11) **EP 2 195 117 B1**
(45) Date of publication and mention of the grant of the patent: **18.04.2012**
(21) Application number: 08830747.5
(22) Date of filing: 11.09.2008
(51) Int. Cl.: B05B 7/12

(54) **AUTOMATIC SOLVENT INJECTION FOR PLURAL COMPONENT SPRAY GUN**
AUTOMATISCHE LÖSUNGSMITTELINJEKTION FÜR EINE MEHRTEILIGE SPRÜHPISTOLE
INJECTION AUTOMATIQUE DE SOLVANT POUR PISTOLET DE PULVÉRISATION À PLUSIEURS COMPOSANTS

(30) Priority: 11.09.2007 US 971305 P
(43) Date of publication of application: 16.06.2010
(73) Proprietor: Graco Minnesota Inc., Minneapolis, MN 55413-1894 (US)
(72) Inventor: ANDERSON, Richard, D., Maple Grove Minnesota 55369 (US); TIX, Joseph, E., Hastings Minnesota 55033 (US); VELGERSDYK, Jeffrey, N., Minneapolis Minnesota 55426 (US)
(74) Representative: Cloughley, Peter Andrew
(86) International application number: PCT/US2008/075963
(87) International publication number: WO 2009/036129

(56) References cited:
- GB-A- 1 381 556
- US-A- 3 945 569
- US-A- 3 945 569
- US-A- 4 073 664
- US-A- 4 583 691
- US-A- 4 791 946
- US-A1- 2005 218 556

## Description

### BACKGROUND ART

Spray guns for applying plural component materials such as fast set foams are well known and typically available in both mechanical purge and air purge variants. The previously known means of purging two component material in mechanical purge guns was through a mechanical purge rod sliding through the mixing bore. This arrangement has the issue of the purge rod sticking inside the bore due to buildup of the sprayed material.

In air purge guns, the previous means of purging two component material was through a high pressure air purging (blast of air through mixing chamber). This design lead to buildup on the internal passages of the mixing chamber and spray tip causing the spray pattern to deteriorate, requiring the operator to clean the mixing chamber to restore functionality.

US 3,945,569 discloses an apparatus for mixing and dispensing two liquids such as organic resins and polyisocyanates which react to form a polyurethane foam. The apparatus comprises a dispensing gun and related equipment and includes a reciprocally mounted valving rod in the gun, which valving rod is circular at its ends and flattened intermediate such ends. In its retracted position, the valving rod is bathed in a liquid which acts as a cleansing agent therefor.

US 4,791,956 discloses a system for purging fluid delivery systems such as paint spray guns with non-toxic, non-polluting cleaning solvents. A sealed tank is provided for storing a cleaning solvent with air pressure applied to deliver the cleaning solvent through a coaxial hose to a slide selectable valve. Pressurized air is also connected to one of the conduits of the coaxial hose. Spray guns or fluid delivery systems are cleaned and purged by first releasing the cleaning solvent in the passageways and then quickly switching to a blow-down mode on the slide selectable valve to discharge the cleaning solvent from the spray gun passages.

US 4,583,691 discloses a spray gun for dispensing plural component foam forming materials. The spray gun includes a mixing chamber having a plurality of entry ports for the individual components. A sliding rod is used to open and close the entry ports and a solvent tank is disclosed for cleaning the mixing chamber to prevent clogging of the gun. The tank includes a tube which fits within the mixing chamber to force solvent therethrough as the gun is inserted into the tank. Slots in the gun body may also be provided to insure further cleaning.

US 4,073,664 discloses an on-site foam generating apparatus which includes storage tanks for supplying the foam-forming reactants, a mixing chamber, and means for conveying the reactants through the mixing chamber. The apparatus comprises means for automatically cleaning and flushing the mixing chamber. When the foam gun head containing the mixing chamber is at rest and inverted in an opening on the top of a solvent storage tank, solvent is continuously recycled through the mixing chamber. When the foam gun head is removed from the tank, a proximity switch senses the absence of metal and actuates an electrical circuit to operate a solenoid valve to divert the solvent from the mix chamber to a by-pass back to the tank. Additionally, a time delay relay is actuated which operates a solenoid valve for a predetermined period to supply purging gas to and through the mixing chamber upon removal of the foam gun head from the tank.

GB 1 381 556 discloses a dispensing apparatus in which a mixing chamber is formed in a member and in the operative position, fluid mixture components are supplied through inlet fittings having check valves to mixing chamber inlet passages. At the same time a gas may be supplied through inlet parts and passages to an annular chamber, passing out through the annular orifice between the mixture discharge outlet and the cap. In the inoperative position the member is moved to another position, when the gas passes from the annular chamber through the inlet passages to purge the mixing chamber, the orifice being sealed. The mixture is a plastics material formed by rapid reaction of the components and the purging gas may be compressed air. The purging air may also in the operative position atomize the mixture to form a spray, or surround and shape a projected stream. The member is moved into the operative position by the action of pressure fluid (which may be the purging gas) or a piston carried on a rod and actuated by a trigger and valve; and returned to the inoperative position by a spring when the trigger is released. The mixing chamber inlets communicate with respective bores which may be arranged chordally or tangentially to promote turbulence and may be spaced along the length of the chamber.

### DISCLOSURE OF THE INVENTION

It is an object of this invention to prevent mixed two component polyurethane from curing within the internal passages of the spray applicator, allowing the user to spray longer before spray pattern distortion occurs or gun maintenance is required.

According to an aspect of the invention, there is provided a plural component spray gun as defined in claim 1.

The mechanical purge gun dispenses the solvent by means of an internal pumping mechanism. The purge rod consists of a small diameter rod and a larger one. As the purge rod is pulled back through the mixing chamber the smaller rod section replaces the larger rod and thus creates a vacuum to pull in the solvent. As the rod moves forward to close the gun the solvent is expelled under pressure from the internal pump along the surface of the purge rod into the mixing chamber, from there it is purged from the gun along with the mixed two component material. The solvent is either self contained in the applicator or plumbed externally to the gun.

The air purge gun automatically dispenses the solvent at de-trigger by means of an internal dosing pump. The dispensed solvent is mixed with the purge air and expelled from the gun through the mixing chamber orifices. Alternatively, the air purge gun automatically dispenses the solvent at de-trigger by means of an internal pumping mechanism. The dispensed solvent is mixed with the purge air and expelled from the gun through the mixing chamber orifices. In another embodiment, the air purge gun automatically dispenses the solvent at de-trigger by means of venturi effect. The solvent is injected into the air stream and expelled from the applicator through the mixing chamber orifices. The solvent is either self contained in the applicator or plumbed externally to the gun.

The invention according to claim 1 relates to a combined mechanical and air purge gun.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

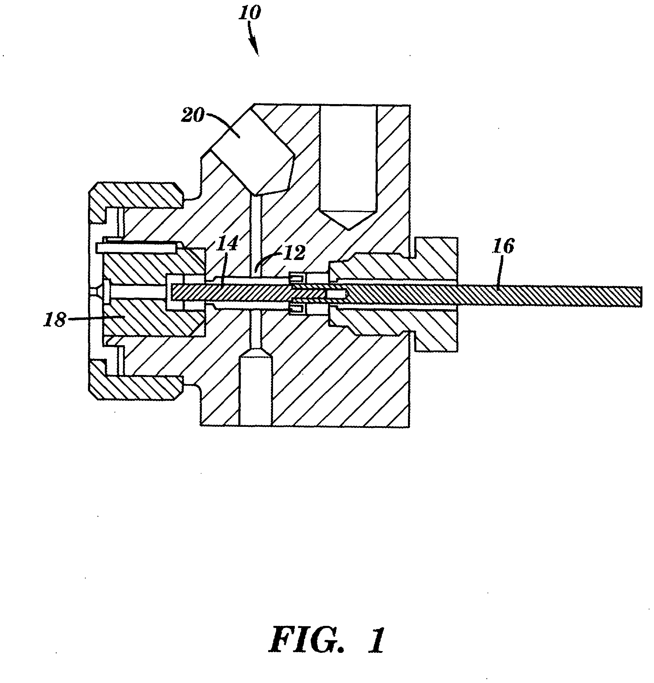

Figure 1 shows a mechanical purge spray gun .
Figure 2 shows the preferred embodiment of a combined mechanical and air purge gun with the gun not spraying.
Figure 3 shows the preferred embodiment of a combined mechanical and air purge gun with the gun spraying.
Figure 4 shows an air purge gun.
Figure 5 shows an air purge gun.
Figure 6 shows an air purge gun.

### BEST MODE FOR CARPING OUT THE INVENTION

The mechanical purge gun 10 of Figure I dispenses the solvent by means of an internal purging mechanism. The purge rod 12 consists of a small diameter rod 14 and a larger one 16. As the purge rod 12 is pulled back through the mixing chamber 18 the smaller rod 14 section replaces the larger rod 16 and thus creates a vacuum to pull in the solvent from the solvent inlet 20. As the rod 12 moves forward to close the gun 10 the solvent is expelled under pressure from the internal pump along the surface of the purge rod 12 into the mixing chamber 18, from there it is purged from the gun 10 along with the mixed two component material. The solvent is either self contained in the applicator or plumbed externally to the gun.

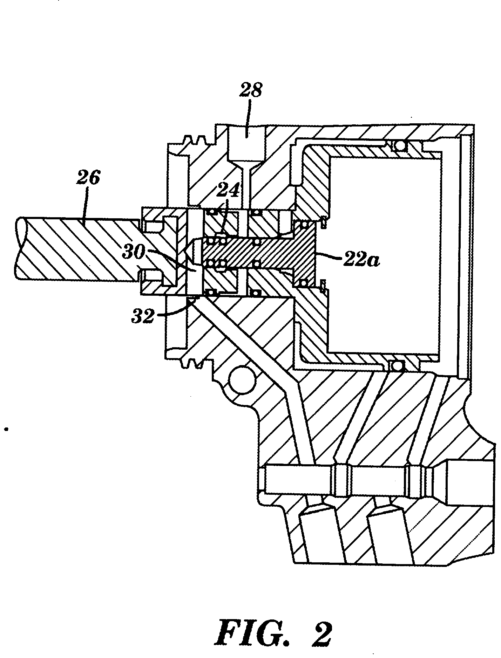

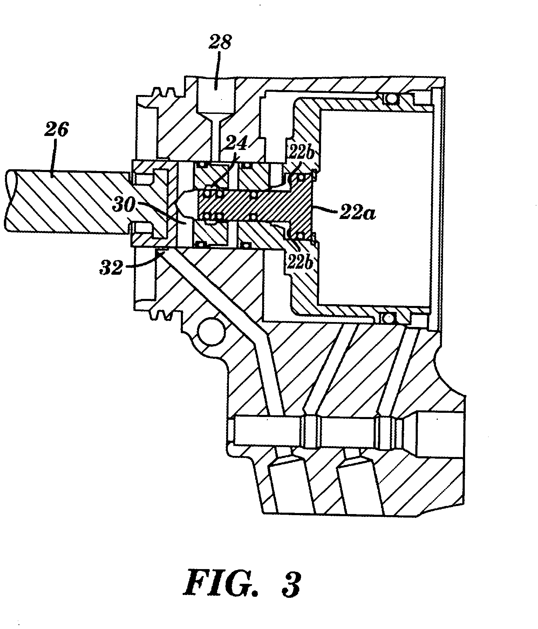

In the preferred embodiment of Figures 2 and 3, a solvent piston 22 shuttles between first (non-spraying - Figure 2) and second (spraying - Figure 3) positions. In the first position, high pressure air applied to the rear 22a of the solvent piston 22 closes a solvent bore 24 around the solvent piston 22 and prevents passage of solvent into the mix chamber 26. In the second position, high pressure air is applied to the front 22b or the solvent piston 22 causing it to retract slightly thereby uncovering the solvent bore 24, closing off the solvent inlet 28 and allowing a slug of solvent to mix with the purge air 32 and pass from the solvent outlet 30 into the mix chamber 26.

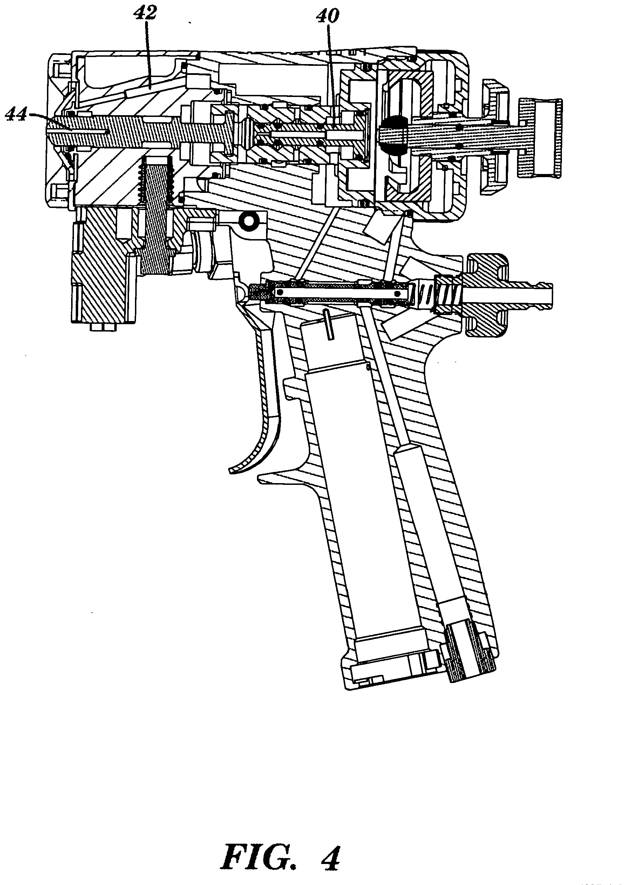

In an alternate embodiment of Figure 4, the air purge gun automatically dispenses the solvent at de-trigger by means of an internal dosing pump 40. The dispensed solvent is mixed with the purge air 42 and expelled from the gun through the mixing chamber orifices 44.

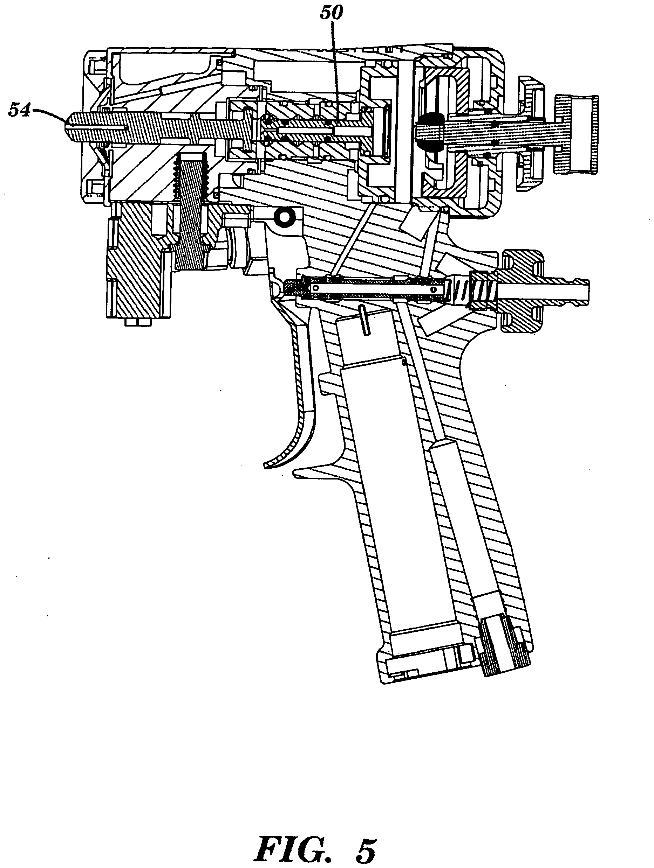

Alternatively in Figure 5, the air purge gun automatically dispenses the solvent at de-trigger by means of an internal pumping mechanism 50. The dispensed solvent is mixed with the purge air 52 and expelled from the gun through the mixing chamber orifices 54.

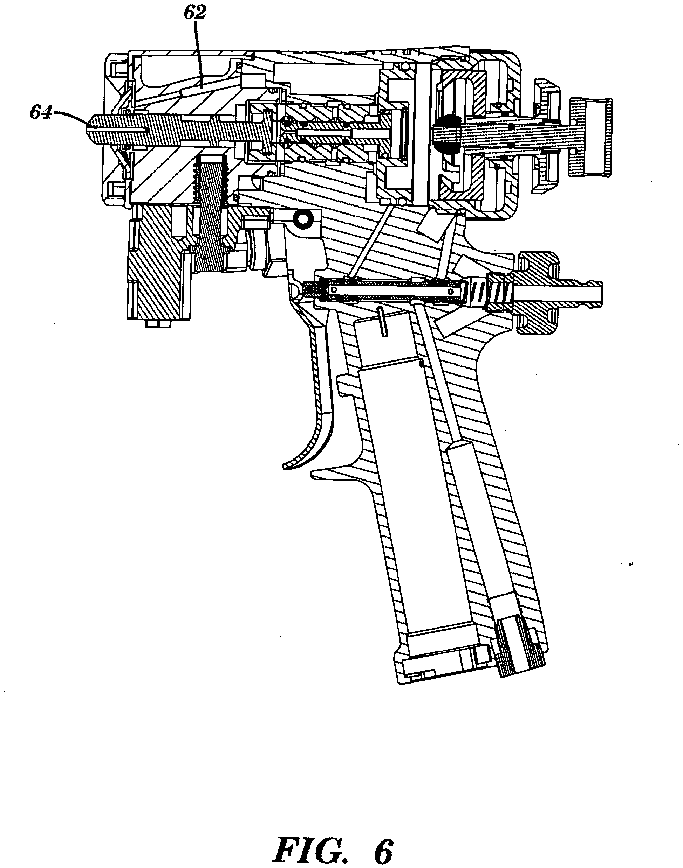

In another embodiment of Figure 6, the air purge gun automatically dispenses the solvent at de-trigger by means of venturi effect 60. The solvent is injected into the air stream 62 and expelled from the applicator through the mixing chamber orifice 64. The solvent is either self contained in the applicator or plumbed eternally to the gun.

It is contemplated that various changes and modifications may be made to the solvent purge mechanism without departing from the scope of the invention as defined by the following claims.

## Claims

1. A plural component spray gun (10) having a mix chamber (26) and a purge air passage (32), comprising:
a source of solvent; and
a solvent piston (22) having a front (22b) and a rear (22a) and movable between a first non-spraying position and a second spraying position such that:
in said first position, high pressure air is applied to said rear (22a) to close a solvent bore (24) around said solvent piston (22) to prevent passage of solvent into said mix chamber (26), and
in said second position, high pressure air is applied to said front (22b) on detriggering said gun (10), causing said solvent piston (22) to retract, uncovering said solvent bore (24), closing off a solvent inlet (28) connected to said solvent source, and allowing a slug of solvent to mix in said purge air passage (32) and pass from a solvent outlet (30) into said mix chamber (26).

## Patentansprüche

1. Mehrkomponenten-Spritzpistole (10) mit einer Mischkammer (26) und einem Spülluftdurchgang (32), die Folgendes umfasst:
eine Lösemittelquelle; und
einen Lösemittelkolben (22), der eine Vorderseite (22b) und eine Rückseite (22a) aufweist und zwischen einer ersten, nicht-sprühenden Position und einer zweiten, sprühenden Position bewegt werden kann, dergestalt, dass:
in der ersten Position die Rückseite (22a) mit Hochdruckluft beaufschlagt wird, um eine Lösemittelbohrung (24) um den Lösemittelkolben (22) herum zu schließen, um ein Strömen von Lösemittel in die Mischkammer (26) hinein zu verhindern, und
in der zweiten Position die Vorderseite (22b) mit Hochdruckluft beaufschlagt wird, wenn die Pistole (10) abgeschaltet wird, wodurch der Lösemittelkolben (22) veranlasst wird, sich zurückzuziehen, wodurch die Lösemittelbohrung (24) freigegeben wird, ein Lösemitteleinlass (28), der mit der Lösemittelquelle verbunden ist, abgesperrt wird und es ermöglicht wird, dass sich eine Stoßmenge Lösemittel in dem Spülluftdurchgang (32) vermischen kann und von einem Lösemittelauslass (30) in die Mischkammer (26) strömen kann.

## Revendications

1. Pistolet de pulvérisation à plusieurs composants (10) ayant une chambre de mélange (26) et un passage d'air de purge (32), comprenant :
une source de solvant ; et
un piston de solvant (22) ayant un avant (22b) et un arrière (22a) et déplaçable entre une première position de non pulvérisation et une seconde position de pulvérisation de telle sorte que :
dans ladite première position, de l'air à haut pression est appliqué sur ledit arrière (22a) pour fermer un alésage de solvant (24) autour dudit piston de solvant (22) pour empêcher le passage du solvant dans ladite chambre de mélange (26), et
dans ladite seconde position, de l'air à haute pression est appliqué sur ledit avant (22b) lors de la désactivation dudit pistolet (10), amenant ledit piston de solvant (22) à se rétracter, découvrant ledit alésage de solvant (24), obturer une entrée de solvant (28) raccordée à ladite source de solvant, et
permettant à une pastille de solvant de se mélanger dans ledit passage d'air de purge (32) et passer depuis une sortie de solvant (30) à l'intérieur de ladite chambre de mélange (26).
